# FASCICULE DE BREVET EUROPEEN

(11) **EP 2 341 728 B1**
(45) Date de publication et mention de la délivrance du brevet: **23.01.2013**
(21) Numéro de dépôt: 10195931.0
(22) Date de dépôt: 20.12.2010
(51) Int. Cl.: H04W 28/26, H04W 72/10

(54) **Système et procédé de contrôle des communications dans un réseau ad-hoc mobile**
System und Verfahren zur Kontrolle der Kommunikationen in einem mobilen Ad-hoc Netzwerk
System and method for controlling communications in a mobile ad-hoc network

(30) Priorité: 30.12.2009 FR 0906393
(43) Date de publication de la demande: 06.07.2011
(73) Titulaire: Thales, 92200 Neuilly Sur Seine (FR)
(72) Inventeur: Rayrole, Martin, 92700, COLOMBES (FR); Soulie, M . Antoine, 92704 Colombes Cedex (FR)
(74) Mandataire: Dudouit, Isabelle

(56) Documents cités:
- WO-A1-00/52950
- WO-A1-01/56323
- CORDEIRO C ET AL: "Scalable and QoS-Aware Dynamic Slot Assignment and Piconet Partitioning to Enhance the Performance of Bluetooth Ad Hoc Networks", IEEE TRANSACTIONS ON MOBILE COMPUTING, IEEE SERVICE CENTER, LOS ALAMITOS, CA, US LNKD- DOI:10.1109/TMC.2006.156, vol. 5, no. 10, 1 octobre 2006 (2006-10-01), pages 1313-1330, XP001546011, ISSN: 1536-1233 [extrait le 2006-08-16]
- SEBASTIÁN ECHEVERRÍA ET AL: "Comparative Analysis of Ad-Hoc Networks Oriented to Collaborative Activities", 1 janvier 2006 (2006-01-01), ARCHITECTURE OF COMPUTING SYSTEMS - ARCS 2006 LECTURE NOTES IN COMPUTER SCIENCE;;LNCS, SPRINGER, BERLIN, DE, PAGE(S) 465 - 479, XP019028431, ISBN: 978-3-540-32765-3 * le document en entier *
- FRAGOULI C ET AL: "Controlled multimedia wireless link sharing via enhanced class-based queuing with channel-state-dependent packet scheduling", INFOCOM '98. SEVENTEENTH ANNUAL JOINT CONFERENCE OF THE IEEE COMPUTER AND COMMUNICATIONS SOCIETIES. PROCEEDINGS. IEEE SAN FRANCISCO, CA, USA 29 MARCH-2 APRIL 1998, NEW YORK, NY, USA,IEEE, US LNKD- DOI:10.1109/INFCOM.1998.665077, vol. 2, 29 mars 1998 (1998-03-29), pages 572-580, XP010270400, ISBN: 978-0-7803-4383-2

## Description

La présente invention concerne un système et un procédé de contrôle des communications au sein d'un réseau ad hoc mobile. Elle s'applique notamment pendant la phase de déploiement d'un nouveau réseau, lorsque tous les terminaux composant ce réseau sont situés dans la même zone géographique. L'invention s'applique avantageusement à des réseaux fonctionnant avec des bandes de fréquences radio UHF (« Ultra High Frequency ») ou des bandes de fréquences encore plus élevées.

Les réseaux ad hoc mobiles sont des réseaux sans infrastructure dans lesquels les informations sont échangées directement entre les noeuds du réseau qui cumulent à la fois les fonctions d'émetteur, de récepteur et de relais de l'information.

Lorsqu'un nombre important de terminaux sont à portée radio les uns des autres, les communications peuvent être impossibles du fait d'interférences radio générées par un nombre important d'utilisateurs et également du temps de convergence non prédictible des algorithmes de découverte du voisinage radio.

Les réseaux ad hoc mobiles connus fonctionnent le plus souvent à faible débit ce qui induit un nombre d'utilisateurs limité, la problématique de réduction du temps de convergence des algorithmes de découverte du voisinage radio est donc moins présente.

Le document "Scalable and QoS-Aware Dynamic Slot Assignment and Piconet Partitioning to Enhance the Performance of Bluetooth Ad Hoc Networks", Cordero C et al, IEEE Transactions on Mobile Computing, IEEE Service Center, Los Alamitos, CA,US, divulgue un système de communications composé d'une pluralité de terminaux communiquant entre eux au sein d'un réseau ad-hoc. Ces terminaux présentent soit la fonction maitre, soit la fonction esclave. L'accès au medium de communication est effectué par une allocation de slots temporels par le terminal maitre pour chaque terminal esclave qui en fait la demande.

Le document précité ne divulgue cependant pas de solution permettant de tester l'état du réseau ad hoc à n'importe quel instant donné.

La présente invention a notamment pour objectif le contrôle des communications au sein du réseau afin de limiter le nombre de terminaux susceptibles d'émettre dans une même zone de couverture définie par la portée radio du système.

A cet effet l'invention a pour objet un système de contrôle des communications au sein d'un réseau ad hoc mobile comportant une pluralité de terminaux ledit système étant tel que :
○ chacun desdits terminaux comporte au moins une antenne radio, un système de communication ad-hoc mobile adapté à émettre et recevoir des données, une base de données de description du réseau qui contient au moins l'adresse de tous les terminaux du réseau et la liste des communautés d'intérêts qui regroupent l'ensemble des terminaux susceptibles de devoir communiquer entre eux, lesdits terminaux comportant en plus un système d'orchestration esclave,
○ au moins un desdits terminaux possède en outre la fonction maitre, lesdits terminaux maitre comportant en outre un système d'orchestration maitre,
○ ledit système d'orchestration esclave comportant au moins un module de test du réseau, un module de contrôle des communications, une base de données des communications à établir et un module d'administration,
○ ledit système d'orchestration maitre comportant au moins un module de test du réseau, un module de contrôle des communications, une base de données des besoins de communication, un moteur de décision, une base de donnée des communications en cours, une base de règles de hiérarchisation des communications et un module d'administration,
o ledit système d'orchestration maitre étant adapté à définir quelles communications entre les terminaux esclave sont autorisées en fonction desdites règles de hiérarchisation et à notifier les systèmes d'orchestration esclave des terminaux esclaves de leur autorisation à établir une communication ou de la nécessité d'interrompre une communication préalablement établie, lesdites règles de hiérarchisation étant établies en fonction d'au moins un des critères suivants: criticité de la communication, durée maximum Dₘₐₓ de la communication, nombre maximum de terminaux pouvant émettre simultanément, bande passante disponible.
○ le module de test du réseau est adapté à exécuter, à un instant donné, une étape de test consistant au moins à :
   ■ décomposer ladite communauté d'intérêt en un nombre de groupes de tests au moins égal à un, chacun desdits groupes de tests comportant au plus un nombre de terminaux égal au nombre maximum de terminaux autorisés à communiquer simultanément, l'intersection entre tous les groupes de tests étant non vide,
   ■ envoyer depuis le terminal maitre vers tous les terminaux esclaves dudit groupe de test un message de demande de test contenant un échantillon du service à tester et une valeur de temporisation Tₜₑₘₚ,
   ■ envoyer depuis chaque terminal esclave, sur réception dudit message de demande de test, ledit échantillon de test à tous les terminaux de la communauté d'intérêt,
   ■ envoyer depuis chaque terminal esclave dudit groupe de test, sur réception d'un échantillon de test, un message d'acquittement au terminal esclave émetteur dudit échantillon de test,
   ■ envoyer depuis chaque terminal esclave dudit groupe de test vers le terminal maitre, avant l'expiration de la temporisation Tₜₑₘₚ, un compte rendu de test contenant la liste des terminaux destinataires de l'échantillon de test pour lesquels aucun acquittement n'a été reçu.

L'invention a également pour objet un procédé de contrôle des communications au sein d'un réseau ad hoc mobile comportant une pluralité de terminaux ayant la fonction esclave, lesdits terminaux comportant en outre un système d'orchestration esclave, au moins un desdits terminaux possédant en outre la fonction maitre, ledit terminal maître comportant en outre un système d'orchestration maître, ledit procédé comportant au moins
○ Une étape de détermination de quelles communications entre les terminaux esclave sont autorisées en fonction de règles de hiérarchisation établies en fonction d'au moins un des critères suivants: criticité de la communication, durée maximum Dₘₐₓ de la communication, nombre maximum de terminaux pouvant émettre simultanément, bande passante disponible,
○ Une étape de notification aux systèmes d'orchestration esclave des terminaux esclaves de leur autorisation à établir une communication ou de la nécessité d'interrompre une communication préalablement établie,
   Une étape de test, à un instant donné, des communications pour toutes les communautés d'intérêt qui regroupent l'ensemble des terminaux susceptibles de devoir communiquer entre eux, ladite étape de test consistant au moins à:
   ■ décomposer ladite communauté d'intérêt en un nombre de groupes de tests au moins égal à un, chacun desdits groupes de tests comportant au plus un nombre de terminaux égal au nombre maximum de terminaux autorisés à communiquer simultanément, l'intersection entre tous les groupes de tests étant non vide,
   ■ envoyer depuis le terminal maitre vers tous les terminaux esclaves dudit groupe de test un message de demande de test contenant un échantillon du service à tester et une valeur de temporisation Tₜₑₘₚ,
   ■ envoyer depuis chaque terminal esclave, sur réception dudit message de demande de test, ledit échantillon de test à tous les terminaux de la communauté d'intérêt,
o envoyer depuis chaque terminal esclave dudit groupe de test, sur réception d'un échantillon de test, un message d'acquittement au terminal esclave émetteur dudit échantillon de test,
o envoyer depuis chaque terminal esclave dudit groupe de test vers le terminal maitre, avant l'expiration de la temporisation Tₜₑₘₚ, un compte rendu de test contenant la liste des terminaux destinataires de l'échantillon de test pour lesquels aucun acquittement n'a été reçu.

D'autres caractéristiques apparaîtront à la lecture de la description détaillée donnée à titre d'exemple et non limitative qui suit faite en regard de dessins annexés qui représentent :
La figure 1, un synoptique de l'architecture d'un terminal esclave mettant en oeuvre le procédé selon l'invention,
La figure 2, un synoptique de l'architecture d'un terminal maitre mettant en oeuvre le procédé selon l'invention.

L'invention concerne les réseaux ad-hoc mobiles, notamment ceux fonctionnant dans une bande de fréquence radio UHF « Ultra High Frequency ». Dans un tel réseau, il est fréquent qu'un nombre important de terminaux soient situés à un bond radio les uns des autres. Par bond radio on entend la zone de couverture géographique maximale permettant de communiquer directement par liaison radio entre deux terminaux. La dimension d'une telle zone est définie par la portée de la liaison radio utilisée. En particulier, lors du déploiement d'un nouveau réseau ad-hoc, un grand nombre de terminaux sont regroupés dans une zone géographique réduite. Lorsque le réseau est établi, une telle configuration peut également apparaitre lorsqu'un grand nombre de terminaux se regroupent dans une zone limitée. Dans de telles circonstances, le temps de convergence des algorithmes de découverte du voisinage radio devient non maitrisable. En effet, les protocoles de l'état de l'art utilisés dans les réseaux ad-hoc ont un temps de convergence théorique qui s'accroit fortement lorsque le nombre de terminaux augmente, et les interférences radio créées par un nombre important de terminaux peuvent rendre ce temps de convergence infini.

Le procédé selon l'invention propose une méthode de contrôle, ou d'orchestration des communications en cas de forte proximité d'un grand nombre de terminaux au sein d'un réseau ad hoc mobile. Un des buts de l'invention est de rester compatible des mécanismes usuels des réseaux ad-hoc mobiles tout en limitant le nombre de terminaux pouvant émettre à un instant donné. Cette limitation permet de maitriser le nombre de terminaux émetteurs et donc de borner le temps de convergence des algorithmes de découverte du voisinage radio. L'invention permet également de réduire les interférences radio qui perturbent le fonctionnement de ces algorithmes.

A cet effet, le procédé selon l'invention comprend au moins les étapes suivantes :
- une étape d'entrée en mode de communication « forte proximité », qui peut être faite au moment de l'établissement du réseau, ou lorsque le réseau est déjà en fonctionnement.
- une étape de test du réseau qui permet de connaitre l'état de fonctionnement du réseau.
- une étape de communication directe entre terminaux qui permet l'utilisation du réseau alors que les terminaux sont regroupés dans une zone géographique réduite.
- une étape de sortie du mode de communication « forte proximité » qui est activée lorsqu'un nombre important de terminaux, jusqu'alors présents dans un même bond radio se dispersent sur une zone géographique étendue.

Pour mettre en ouvre le procédé selon l'invention, chaque terminal du réseau ad-hoc mobile est équipé d'un système d'orchestration qui implémente le procédé de contrôle des communications et notamment l'établissement du mode de communication forte proximité. On parle de forte proximité pour désigner un scénario pour lequel un très grand nombre de terminaux sont tous situés dans un même bond radio.

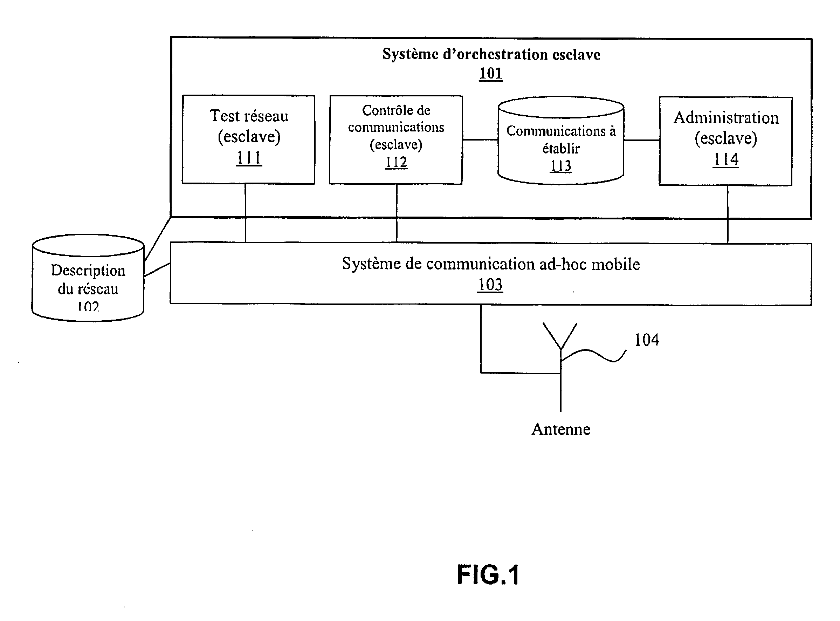

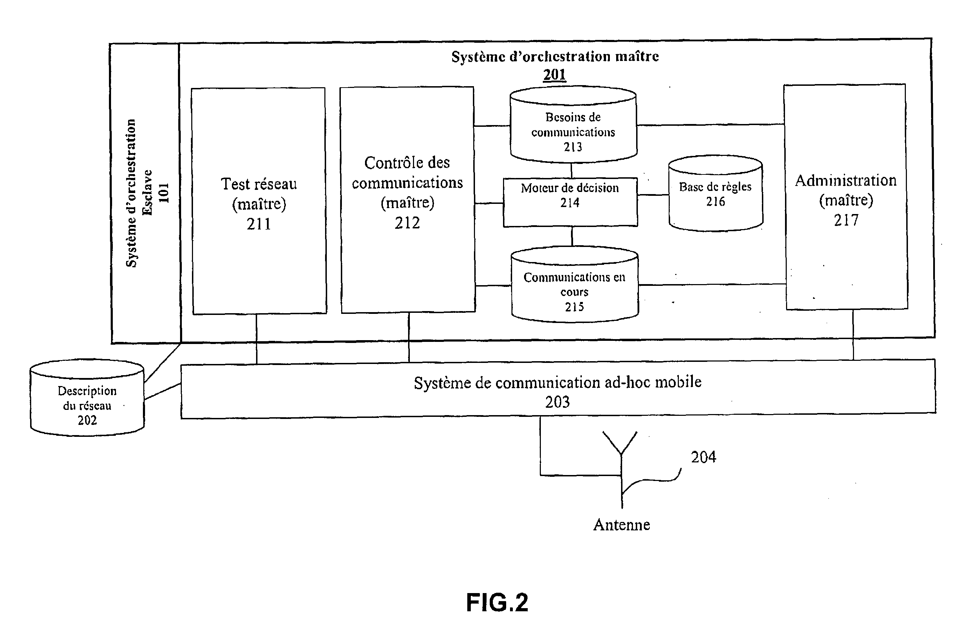

Pour cela, deux types de terminaux sont définis tels que schématisés à l'appui des figures 1 et 2.

La figure 1 schématise l'architecture d'un terminal 100 esclave équipé d'un système d'orchestration esclave. Ce terminal 100 comprend au moins une antenne radio 104, un système de communication ad-hoc mobile 103, une base de données 102 contenant la description du réseau et un système d'orchestration esclave 101.

Le système de communication ad-hoc mobile 103 offre, outre les mécanismes de base d'un système ad-hoc mobile tels qu'un protocole de routage ou de signalisation, un mode silence radio. Lorsque ce mode est activé, le terminal correspondant fonctionne uniquement en récepteur radio. Lorsque ce mode est désactivé, le terminal correspondant fonctionne à la fois en émetteur et récepteur radio.

La base de données 102 contient la description du réseau, en particulier l'adresse de tous les terminaux du réseau et la liste des communautés d'intérêt avec les terminaux qui les constituent. Une communauté d'intérêt ou « CDI » est un regroupement de terminaux susceptibles de devoir communiquer entre eux dans un but prédéfini. Par exemple une communauté d'intérêt peut regrouper des terminaux souhaitant établir régulièrement des conférences téléphoniques; une autre communauté d'intérêt peut regrouper un ensemble de terminaux, couplés à des caméras, qui souhaitent partager leurs séquences vidéo.

Le système d'orchestration esclave 101 comprend au moins les éléments suivants. Un module de test du réseau 111 reçoit des demandes de test, via le réseau ad-hoc mobile, et les exécute dans le but de tester l'état de fonctionnement du réseau. Une base de données 113 contient les communications que le terminal 100 souhaite établir à un instant donné. Pour chacune de ces communications, la base de données contient un identifiant unique pour chaque terminal, la liste des terminaux destinataires ou la communauté d'intérêt destinataire, le type de liaison qui peut être unidirectionnelle ou bidirectionnelle, la bande passante minimale nécessaire, le service (par exemple téléphonie, messagerie, système d'alarme...), et la criticité de la communication. Par exemple une criticité forte est définie pour un message d'alerte grave, et une criticité faible pour un message dont le contenu est jugé moins important. Un module de contrôle des communications 112 envoie, sur demande, la liste des communications que le terminal 100 souhaite établir à un instant donné, et établit ou supprime les communications en fonction des autorisations qu'il reçoit du terminal maître 200. Un module d'administration 114 permet au terminal 100 d'entrer et de sortir du mode de communication forte proximité.

La figure 2 schématise l'architecture d'un terminal maitre 200 équipé d'un système d'orchestration maitre. Ce terminal 200 comprend au moins tous les composants d'un terminal esclave 100, car il exécute à la fois la fonction de maitre et d'esclave. Ce terminal 200 comprend donc un système d'orchestration esclave 101, une base de données de description du réseau 202, un système de communication ad-hoc mobile 203 et une antenne radio 204. De plus, il inclue également un système d'orchestration maitre 201 qui comporte les éléments suivants.

Un module de test réseau 211 envoie des demandes de test à une pluralité de terminaux esclaves, via le réseau ad-hoc mobile.

Un module 212 de contrôle des communications collecte les besoins de communications au sein du réseau, et transmet aux terminaux esclaves la liste des communications qu'ils sont autorisés à établir.

Une base de données 213 contient l'ensemble des besoins de communications sur l'ensemble du réseau. Son contenu correspond à l'agrégation des bases de données 113 des communications à établir pour tous les terminaux esclaves. Pour chaque communication à établir, le terminal demandeur est également mémorisé de même que l'heure à laquelle la communication a été initialement demandée par le terminal esclave 100.

Une base de données 215 contient la liste de toutes les communications actuellement en cours dans le réseau. Pour chacune de ces communications, la base de données 215 contient les mêmes paramètres que ceux de la base de données 213 des besoins de communications, ainsi que l'heure d'établissement de chaque communication.

Une base de règles 216 exprimées sous forme de prédicats. Ces règles permettent de choisir, parmi les besoins de communications, quelles communications pourront être établies, et quelles communications déjà établies devront être interrompues. La base de règles 216 reçoit en entrée l'ensemble des données contenues dans les bases de données 213 contenant l'ensemble des besoins de communications et 215 contenant la liste de toutes les communications en cours dans le réseau, ainsi que le nombre maximal de terminaux pouvant émettre simultanément dans un même bond radio. A partir de ces données, les règles permettent d'affecter un ordre de priorité entre les communications à établir ou celles déjà établies. Cet ordre de priorité est ensuite utilisé pour autoriser ou refuser chacune des communications à établir ou déjà établies. Enfin, en comparant ce marquage « autorisé / refusé » et la liste des communications déjà établies, les règles déterminent la liste des nouvelles communications à établir, et la liste des communications déjà établies qu'il faut interrompre.

A titre d'exemple, la base de règles 216 contient les règles suivantes.

Si une communication pour le service téléphonie est de priorité moyenne et qu'elle est établie depuis une durée prédéfinie, alors cette communication doit basculer à une priorité faible.

Si une communication est de criticité forte, alors sa priorité est haute.

Si chaque terminal émetteur d'une communication à établir est également émetteur d'une ou plusieurs communications déjà établies, alors la priorité de la communication à établir est augmentée d'un niveau.

Si une communication "A" non établie et sans marquage, c'est à dire ni autorisée ni refusée, est plus prioritaire qu'une communication "B" déjà établie, alors la communication "A" doit être marquée comme autorisée.

Si deux communications ont le même niveau de priorité, alors celle exigeant le moins de bande passante est la plus prioritaire.

Si le nombre de terminaux émetteurs pour les communications déjà établies et les communications autorisées est supérieur au nombre maximal de terminaux pouvant émettre simultanément dans un même bond radio, alors la communication de plus faible priorité parmi ces communications doit être marquée comme refusée.

Si une communication déjà activée est marquée refusée, alors cette communication doit être interrompue.

Un moteur de décision 214 reçoit comme données d'entrée les bases de données des besoins de communications 213 et des communications en cours 215, ainsi que la base des règles 216. En sortie, le moteur de décision 214 fournit au module 212 de contrôle des communications la liste des communications en cours à interrompre et la liste des communications à établir.

Enfin, un module d'administration 217 permet d'entrer et de sortir du mode de communication forte proximité.

Les paragraphes suivant détaillent la mise en oeuvre de chaque étape du procédé selon l'invention par les terminaux « maitre » 200 et « esclave » 100.

### Initialisation

Les opérations suivantes sont effectuées durant une phase d'initialisation des systèmes d'orchestration maitre et esclave.

La description du réseau est diffusée sur tous les terminaux. Cette diffusion peut être effectuée, par exemple, en utilisant un support physique de mémoire inséré dans chaque terminal 100,200. Un paramètre de configuration, présent dans chaque terminal 100,200, indique si ce terminal est uniquement « esclave » ou s'il est également « maître ». Ce paramètre a la valeur « esclave » par défaut. Cette valeur est modifiée, via l'interface utilisateur du terminal, à la valeur « maître » pour un et un seul terminal du réseau choisi de manière aléatoire.

Sur le terminal « maître » 200, un autre paramètre de configuration indique le nombre maximal de terminaux susceptibles d'émettre dans un même bond radio à un instant donné. Ce paramètre est nommé Nₘₐₓ dans la suite du document. Sa valeur est définie en fonction des contraintes du système et de la forme d'onde support du réseau.

Pour chaque service supporté par le système de communication (par exemple téléphonie, messagerie, partage de fichier, ...), un échantillon de test est mémorisé sur le terminal maître 200 lors de l'installation du service. Par exemple quelques secondes de parole pour le service de téléphonie, un texte pour le service de messagerie, etc... Cet échantillon des données à transmettre est utilisé par le module de test du réseau 111,211 selon la procédure décrite ci-dessous, dans le but de déterminer l'état de fonctionnement de chaque service.

### Entrée en mode de communication « forte proximité »

L'entrée en mode de communication « forte proximité » est notamment effectuée au démarrage du réseau. Le terminal maître 200 démarre avec le mode de communication « forte proximité » activé et le mode « silence radio » désactivé. Tous les autres terminaux démarrent avec le mode de communication « forte proximité » activé et le mode « silence radio » activé. L'entrée en mode de communication « forte proximité » peut également être effectuée alors que le réseau est déjà opérationnel. Ce cas de figure intervient par exemple lorsqu'un nombre important de terminaux, jusqu'alors répartis sur une zone géographique étendue, se regroupent dans une zone géographique restreinte équivalente à un même bond radio. Dans ce cas, l'entrée en mode de communication « forte proximité » est effectuée par le module d'administration 114,217.

Sur le terminal maître 200, la procédure suivante est lancée par une commande d'entrée en mode de communication « forte proximité ». Cette commande est par exemple invoquée depuis l'interface utilisateur du terminal maître 200.

Les bases de données des besoins de communication 213 et des communications en cours 215 sont purgées, c'est-à-dire que leur contenu est effacé.

Les modules de test réseau 211 et de contrôle des communications 212 du terminal sont activés.

Le mode silence radio du système de communication ad-hoc mobile 203 du terminal maitre 200 est désactivé.

Le module d'administration 217 du terminal maître 200 diffuse à tous les terminaux du réseau une notification d'entrée en mode de communication « forte proximités.

Sur chaque terminal esclave 100, la procédure suivante est exécutée sur réception d'une notification d'entrée en mode de communication « forte proximité ».

La base de données des communications à établir 113 est purgée.

Les modules de test réseau 111 et de contrôle des communications 114 du terminal sont activés.

Si le terminal 100 n'est pas également le terminal maître, le mode silence radio du système de communication ad-hoc mobile 103 du terminal maitre 200 est activé.

### Test du réseau

Le module de test du réseau 111,211 permet de connaître l'état de fonctionnement du réseau à un instant donné. Ce test réseau est orchestré par le terminal maître 200 de manière à limiter le nombre de terminaux pouvant émettre à un instant donné.

Sur le terminal maître 200, la procédure suivante est lancée depuis l'interface utilisateur du terminal maître 200.

Le procédé selon l'invention traite successivement chaque communauté d'intérêt présente dans la base de données 202 de description du réseau et chaque service supporté par chaque communauté d'intérêt, en effectuant au moins les opérations décrites ci-dessous.

Si le nombre de terminaux déclarés dans la communauté d'intérêt est supérieur à Nₘₐₓ, alors plusieurs groupes de test sont automatiquement constitués de la manière suivante. Un terminal N1 est choisi aléatoirement parmi les terminaux déclarés dans la communauté d'intérêt. Les autres terminaux déclarés dans la communauté d'intérêt sont répartis, de manière aléatoire, en groupes de test comportant (Nₘₐₓ-1 ) terminaux. Si le nombre de ces terminaux n'est pas divisible par (Nₘₐₓ-1), le dernier groupe de test contiendra un nombre de terminaux inférieur à (Nₘₐₓ-1). Le terminal N1 est ajouté à chaque groupe de test ainsi créé. Ce terminal N1 fait donc partie de tous les groupes de test, pour la communauté d'intérêt et le service concernés par le test. Ainsi l'intersection entre tous les groupes de test est non vide ce qui permet d'assurer une couverture complète de la procédure selon l'invention de test du réseau.

Si le nombre de terminaux déclarés dans la communauté d'intérêt est inférieur ou égal à Nₘₐₓ, le groupe de test est identique à la communauté d'intérêt.

Un test du réseau est effectué pour chaque groupe de test en les considérant les uns après les autres, de la manière suivante.

Un message de demande de test, avec comme destinataires tous les terminaux du groupe de test est envoyé par le module de test réseau 211 du terminal maître 200. Cette demande contient un échantillon correspondant au service à tester et une valeur de temporisation. Cette valeur de temporisation est automatiquement calculée en fonction de la forme d'onde, du nombre de terminaux dans le groupe de test, et de la taille ou de la durée de l'échantillon de test.

Le module de test réseau 211 du terminal maître 200 attend ensuite la réception de tous les comptes-rendus de test provenant de chacun des terminaux du groupe de test. Cette attente est bornée par la valeur de la temporisation Tₜₑₘₚ ajoutée à la durée maximale Dₘₐₓ de transmission de tous les comptes-rendus de test.

Le module de test réseau 211 mémorise tous les comptes-rendus de test reçus des terminaux esclaves. Lorsque l'ensemble des communautés d'intérêt et des services a été testé, le module de test réseau 211 envoie à l'utilisateur du terminal maître 200 une synthèse des résultats du test du réseau. Cette synthèse contient, pour chaque communauté d'intérêt et chaque service supporté par elle, la liste des terminaux qui apparaissent dans les comptes-rendus de test, c'est-à-dire, les terminaux pour lesquels aucun acquittement n'a été reçu.

Sur chaque terminal esclave 100, la procédure suivante est exécutée sur réception d'un message de demande de test.

L'adresse du terminal qui a émis le message de demande de test est mémorisée, par le module d'administration, comme étant l'adresse du terminal maître 200.

Si le terminal n'est pas également le terminal maître 200, le système de communication ad-hoc mobile 103 du terminal esclave 100 sort du mode silence radio.

Le terminal esclave 100 diffuse à la communauté d'intérêts J'échantillon de test reçu, précédemment transmis par le terminal maître 200.

Il attend ensuite la période de temporisation reçue dans la demande de test. Pendant cette attente, il effectue les opérations suivantes.

Il reçoit les échantillons de test diffusés par chacun des autres terminaux du groupe de test, et envoie un message d'acquittement à chaque terminal émetteur de ces échantillons de test.

Il mémorise les acquittements reçus des autres terminaux.

L'attente peut être écourtée lorsque le terminal a reçu un acquittement de la part de tous les autres terminaux destinataires de la demande de test, et qu'il a lui-même envoyé un acquittement à tous ces terminaux.

Il envoie au terminal maître 200 un compte-rendu de test contenant la liste des terminaux destinataires de la demande de test pour lesquels aucun acquittement n'a été reçu.

Si le terminal n'est pas également le terminal maître 200, le système de communication ad-hoc mobile 103 du terminal esclave 100 réactive le mode silence radio.

### Communications directes entre terminaux

Le module de contrôle des communications 112,212 permet d'établir des communications entre terminaux.

Pour permettre ces communications, le terminal maître 200 commence par recenser les besoins de communication au sein du réseau en interrogeant chaque terminal esclave 100, puis il autorise l'établissement d'un ensemble sélectionné de communications. Ces opérations sont décrites ci-dessous.

Sur chaque terminal esclave 100, la base de données des communications à établir 113 est mise à jour à chaque nouvelle demande de communication ou à chaque suppression d'une demande précédente. Ces demandes et ces suppressions sont requises, par exemple, par l'utilisateur du terminal esclave 100 via l'interface utilisateur, ou par un système externe via une interface informatique.

Sur le terminal maître 200, la procédure suivante est exécutée périodiquement avec une période définie par un paramètre de configuration. Le module de contrôle des communications 212 du terminal maître 200 interroge successivement chaque terminal esclave 100 sur ses besoins de communication et mémorise les réponses dans la base de données des besoins de communication 213.

Il détermine, par l'intermédiaire du moteur de décision 214, quelles nouvelles communications peuvent être autorisées, et quelles communications existantes doivent être interrompues.

Pour chaque nouvelle communication autorisée, il notifie l'autorisation au terminal demandeur, en précisant l'identifiant unique qui a été envoyé par le terminal demandeur.

Pour chaque communication existante à interrompre, il notifie l'interruption au terminal qui avait demandé la communication, en précisant l'identifiant unique qui avait été envoyé par le terminal demandeur.

Il met à jour ses bases de données des besoins de communications 213 et des communications établies 215.

Sur chaque terminal esclave 100, la procédure suivante est exécutée sur réception d'une demande de ses besoins de communication.

Si le terminal est en mode silence radio, le système de communication ad-hoc mobile 103 du terminal esclave 100 désactive le mode silence radio.

Le terminal esclave 100 répond à la demande en envoyant le contenu de la base de données des communications à établir 113.

Si le terminal était auparavant en mode silence radio, le système de communication ad-hoc mobile 103 du terminal réactive le mode silence radio.

Sur chaque terminal esclave 100, la procédure suivante est exécutée sur réception d'une notification d'autorisation pour une nouvelle communication.

La nouvelle communication autorisée est supprimée de la base de données des communications à établir 113.

Si le terminal est en mode silence radio, le système de communication ad-hoc mobile 103 du terminal désactive le mode silence radio.

Le terminal esclave 100 établit la communication.

Si cette communication est bidirectionnelle, tous les terminaux destinataires, sur réception de l'établissement de communication, demandent à leur système de communication ad-hoc mobile 103 de désactiver le mode silence radio.

En fin d'une communication bidirectionnelle, chaque terminal destinataire, sur réception de fin de communication, demande à son système de communication ad-hoc mobile de réactiver le mode silence radio sauf si le terminal a d'autres communications en cours, et sauf si le terminal est également le terminal maître 200.

Le module de contrôle des communications 112 du terminal esclave 100 notifie le terminal maître 200 de la fin de la communication en faisant référence à l'identifiant unique correspondant à cette communication.

Si aucune autre communication n'est en cours sur le terminal et que ce terminal n'est pas également le terminal maître 200, le module de contrôle des communications 112 demande au système de communication ad-hoc mobile 103 du terminal de réactiver le mode silence radio.

Sur chaque terminal esclave 100, la procédure suivante est exécutée sur réception d'une notification d'interruption d'une communication établie.

Le terminal esclave 100 interrompt la communication.

Si cette communication était bidirectionnelle, chaque terminal destinataire, sur réception de fin de communication, demande à son système de communication ad-hoc mobile 103 de désactiver le mode silence radio sauf si le terminal a d'autres communications en cours, et sauf si le terminal est également le terminal maître 200.

Si aucune autre communication n'est en cours sur le terminal et que ce terminal n'est pas également le terminal maître 200, le système de communication ad-hoc mobile 103 du terminal réactive le mode silence radio.

### Sortie du mode de communication « forte proximité »

Le module d'administration 114,217 permet de sortir du mode de communication forte proximité.

Sur le terminal maître 200, la procédure suivante est lancée par une commande de sortie du mode de communication forte proximité.

Les modules de test réseau 211 et de contrôle des communications 212 du terminal sont désactivés.

Les bases de données des besoins de communication 213 et des communications en cours 215 sont purgées.

Le module d'administration 217 du terminal maître 200 diffuse à tous les terminaux du réseau une notification de sortie du mode de communication forte proximité.

Sur chaque terminal esclave 100, la procédure suivante est exécutée sur réception d'une notification de sortie du mode de communication forte proximité.

Les modules de test réseau 11 et de contrôle des communications 112 du terminal sont désactivés.

La base de données des communications à établir 113 est purgée.

Le système de communication ad-hoc mobile 103 du terminal désactive le mode silence radio.

## Revendications

1. Système de contrôle des communications au sein d'un réseau ad hoc mobile comportant une pluralité de terminaux ledit système étant tel que:
o chacun desdits terminaux comporte au moins une antenne radio (104,204), un système de communication ad-hoc mobile (103,203) adapté à émettre et recevoir des données, une base de données de description du réseau (102,202) qui contient au moins l'adresse de tous les terminaux du réseau et la liste des communautés d'intérêts qui regroupent l'ensemble des terminaux susceptibles de devoir communiquer entre eux, lesdits terminaux (100, 200) comportant en plus un système d'orchestration esclave (101),
o au moins un desdits terminaux (200) possède en outre la fonction maitre, lesdits terminaux maitre (200) comportant en outre un système d'orchestration maitre (201),
o ledit système d'orchestration esclave (101) comportant au moins un module de test du réseau (111), un module de contrôle des communications (112), une base de données des communications à établir (113) et un module d'administration (114),
o ledit système d'orchestration maitre (201) comportant au moins un module de test du réseau (211), un module de contrôle des communications (212), une base de données des besoins de communication (213), un moteur de décision (214), une base de donnée des communications en cours (215), une base de règles (216) de hiérarchisation des communications et un module d'administration (217),
o ledit système d'orchestration maitre (201) étant adapté à définir quelles communications entre les terminaux esclave (100) sont autorisées en fonction desdites règles de hiérarchisation et à notifier les systèmes d'orchestration esclave (101) des terminaux esclaves (100) de leur autorisation à établir une communication ou de la nécessité d'interrompre une communication préalablement établie, lesdites règles de hiérarchisation étant établies en fonction d'au moins un des critères suivants: criticité de la communication, durée maximum Dₘₐₓ de la communication, nombre maximum de terminaux pouvant émettre simultanément, bande passante disponible,
ledit système étant **caractérisé en ce que** ledit module de test du réseau (211) est adapté à exécuter, à un instant donné, une étape de test consistant au moins à :
o décomposer ladite communauté d'intérêt en un nombre de groupes de tests au moins égal à un, chacun desdits groupes de tests comportant au plus un nombre de terminaux égal au nombre maximum de terminaux autorisés à communiquer simultanément, l'intersection entre tous les groupes de tests étant non vide,
o envoyer depuis le terminal maitre (200) vers tous les terminaux esclaves (100) dudit groupe de test un message de demande de test contenant un échantillon du service à tester et une valeur de temporisation Tₜₑₘₚ,
o envoyer depuis chaque terminal esclave (100), sur réception dudit message de demande de test, ledit échantillon de test à tous les terminaux de la communauté d'intérêt,
o envoyer depuis chaque terminal esclave (100) dudit groupe de test, sur réception d'un échantillon de test, un message d'acquittement au terminal esclave émetteur dudit échantillon de test,
o envoyer depuis chaque terminal esclave (100) dudit groupe de test vers le terminal maitre (200), avant l'expiration de la temporisation Tₜₑₘₚ, un compte rendu de test contenant la liste des terminaux destinataires de l'échantillon de test pour lesquels aucun acquittement n'a été reçu.

2. Procédé de contrôle des communications au sein d'un réseau ad hoc mobile comportant une pluralité de terminaux ayant la fonction esclave (100), lesdits terminaux comportant en outre un système d'orchestration esclave (101), au moins un desdits terminaux (200) possédant en outre la fonction maitre, ledit terminal maître (200) comportant en outre un système d'orchestration maître (201), ledit procédé comportant au moins :
o Une étape de détermination de quelles communications entre les terminaux esclave (100) sont autorisées en fonction de règles de hiérarchisation établies en fonction d'au moins un des critères suivants: criticité de la communication, durée maximum Dₘₐₓ de la communication, nombre maximum de terminaux pouvant émettre simultanément, bande passante disponible,
o Une étape de notification aux systèmes d'orchestration esclave (101) des terminaux esclaves (100) de leur autorisation à établir une communication ou de la nécessité d'interrompre une communication préalablement établie,
ledit procédé étant **caractérisé en ce qu'**il comporte en outre une étape de test, à un instant donné, des communications pour toutes les communautés d'intérêt qui regroupent l'ensemble des terminaux susceptibles de devoir communiquer entre eux, ladite étape de test consistant au moins à :
o décomposer ladite communauté d'intérêt en un nombre de groupes de tests au moins égal à un, chacun desdits groupes de tests comportant au plus un nombre de terminaux égal au nombre maximum de terminaux autorisés à communiquer simultanément, l'intersection entre tous les groupes de tests étant non vide,
o envoyer depuis le terminal maitre (200) vers tous les terminaux esclaves (100) dudit groupe de test un message de demande de test contenant un échantillon du service à tester et une valeur de temporisation Tₜₑₘₚ,
o envoyer depuis chaque terminal esclave (100), sur réception dudit message de demande de test, ledit échantillon de test à tous les terminaux de la communauté d'intérêt,
o envoyer depuis chaque terminal esclave (100) dudit groupe de test, sur réception d'un échantillon de test, un message d'acquittement au terminal esclave émetteur dudit échantillon de test,
o envoyer depuis chaque terminal esclave (100) dudit groupe de test vers le terminal maitre (200), avant l'expiration de la temporisation Tₜₑₘₚ, un compte rendu de test contenant la liste des terminaux destinataires de l'échantillon de test pour lesquels aucun acquittement n'a été reçu.

## Claims

1. A system for controlling communications within a mobile ad hoc network comprising a plurality of terminals, said system being such that:
each of said terminals includes at least one radio antenna (104, 204), one mobile ad hoc communication system (103, 203) that is designed to transmit and receive data, one network description database (102, 202) that contains at least the address of all of the terminals of the network and the list of the communities of interest that group all of the terminals that are likely to have to communicate with each other, said terminals (100, 200) further comprising a slave orchestration system (101);
at least one of said terminals (200) further includes the master function, said master terminals (200) further comprising a master orchestration system (201);
said slave orchestration system (101) at least comprising one network test module (111), one module for controlling communications (112), one database (113) for communications to be established and one administration module (114),
said master orchestration system (201) comprising at least one network test module (211), one module for controlling communications (212), one database (213) for communication requirements, one decision engine (214), one database (215) for ongoing communications, one rules database (216) for prioritising communications and one administration module (217),
said master orchestration system (201) being designed to define which communications between the slave terminals (100) are authorised as a function of said prioritisation rules and to notify the slave orchestration systems (101) of the slave terminals (100) of their authorisation to establish a communication or of the necessity to interrupt a previously established communication, said prioritisation rules being established as a function of at least one of the following criteria: criticality of the communication, maximum duration Dₘₐₓ of the communication, maximum number of terminals that can transmit simultaneously, available pass-band,
said system being **characterised in that** said network test module (211) is designed to execute, at a given instant, a test step that at least consists in:
breaking down said community of interest into a number of test groups that is at least equal to one, each of said test groups comprising at most a number of terminals that is equal to the maximum number of terminals authorised to communicate simultaneously, the intersection between all of the test groups being not empty,
sending a test request message, from the master terminal (200) to all of the slave terminals (100) of said test group, that contains a sample of the service to be tested and a timer value Tₜᵢₘₑ,
sending said test sample, from each slave terminal (100) on receipt of said test request message, to all of the terminals of the community of interest,
sending an acknowledgement message, from each slave terminal (100) of said test group on receipt of a test sample, to the slave terminal that transmitted said test sample,
sending a test report, from each slave terminal (100) of said test group, to the master terminal (200) before the expiry of the timer Tₜᵢₘₑ that contains the list of terminals that are recipients of the test sample for which no acknowledgement has been received.

2. A method for controlling communications within a mobile ad hoc network comprising a plurality of terminals having the slave function (100), said terminals further comprising a slave orchestration system (101), at least one of said terminals (200) also having the master function, said master terminal (200) further comprising a master orchestration system (201), said method comprising at least:
a step of determining which communications between the slave terminals (100) are authorised as a function of prioritisation rules established as a function of at least one of the following criteria: criticality of the communication, maximum duration Dₘₐₓ of the communication, maximum number of terminals that can transmit simultaneously, available pass-band,
a step of notifying the slave orchestration systems (101) of the slave terminals (100) of their authorisation to establish a communication or of the necessity to interrupt a previously established communication,
said method being **characterised in that** it further comprises a step of testing, at a given instant, communications for all of the communities of interest that group all of the terminals that are likely to have to communicate with each other, said test step at least consisting in:
breaking down said community of interest into a number of test groups that is at least equal to one, each of said test groups comprising at most a number of terminals that is equal to the maximum number of terminals authorised to communicate simultaneously, the intersection between all of the test groups being not empty,
sending a test request message, from the master terminal (200) to all of the slave terminals (100) of said test group, that contains a sample of the service to be tested and a timer value Tₜᵢₘₑ,
sending said test sample, from each slave terminal (100) on receipt of said test request message, to all of the terminals of the community of interest,
sending an acknowledgement message, from each slave terminal (100) of said test group on receipt of a test sample, to the slave terminal that transmitted said test sample,
sending a test report, from each slave terminal (100) of said test group, to the master terminal (200) before the expiry of the timer Tₜᵢₘₑ that contains the list of terminals that are recipients of the test sample for which no acknowledgement has been received.

## Patentansprüche

1. System zur Kontrolle der Kommunikationen innerhalb eines Ad-hoc Mobil-Netzwerks, das eine Vielzahl von Endgeräten aufweist, wobei das System derart ist, dass:
jedes der Endgeräte mindestens eine Funkantenne (104, 204), ein Ad-hoc Mobil-Kommunikationssystem (103, 203), das geeignet ist, Daten zu senden und zu empfangen, eine Datenbank zur Beschreibung des Netzwerks (102, 202), die mindestens die Adresse aller Endgeräte des Netzwerks und die Liste der Interessensgemeinschaften enthält, die die Gesamtheit der Endgeräte gruppieren, die eventuell miteinander kommunizieren müssen, aufweist, wobei die Endgeräte (100, 200) zusätzlich ein Slave-Managementsystem (101) aufweisen,
mindestens eines der Endgeräte (200) ferner die Funktion Master besitzt, wobei die Master-Endgeräte (200) ferner ein Master-Managementsystem (201) aufweisen,
wobei das Slave-Managementsystem (101) mindestens ein Netzwerk-Testmodul (111), ein Kommunikations-Kontrollmodul (112), eine Datenbank der zu erstellenden Kommunikationen (113) und ein Administrationsmodul (114) aufweist,
wobei das Master-Managementsystem (201) mindestens ein Netzwerk-Testmodul (211), ein Kommunikations-Kontrollmodul (212), eine Kommunikationsbedarfs-Datenbank (213), eine Entscheidungsmaschine (214), eine Datenbank der laufenden Kommunikationen (215), eine Datenbank (216) der Hierarchisierungsregeln der Kommunikationen und ein Administrationsmodul (217) aufweist,
wobei das Master-Managementsystem (201) imstande ist zu definieren, welche Kommunikationen zwischen den Slave-Endgeräten (100) in Abhängigkeit von den Hierarchisierungsregeln genehmigt sind und den Slave-Managementsystemen (101) der Slave-Endgeräte (100) ihre Genehmigung zum Aufbau einer Kommunikation zuzustellen oder über die Notwendigkeit zu informieren, eine zuvor aufgebaute Kommunikation zu unterbrechen, wobei die Hierarchisierungsregeln in Abhängigkeit von mindestens einem der folgenden Kriterien erstellt werden: Kritizität der Kommunikation, maximale Dauer Dₘₐₓ der Kommunikation, maximale Anzahl der Endgeräte, die gleichzeitig senden können, verfügbare Bandbreite,
wobei das System **dadurch gekennzeichnet ist, dass** das Testmodul des Netzwerks (211) geeignet ist, um zu einem bestimmten Augenblick einen Testschritt durchzuführen, der mindestens darin besteht:
die Interessensgemeinschaft in eine Anzahl von Testgruppen zu unterteilen, die mindestens gleich eins ist, wobei jede der Testgruppen höchstens eine Anzahl von Endgeräten aufweist, die der maximalen Anzahl von Endgeräten entspricht, die gleichzeitig kommunizieren dürfen, wobei die Schnittstelle zwischen allen Testgruppen nicht leer ist,
vom Master-Endgerät (200) an alle Slave-Endgeräte (100) der Testgruppe eine Testanfragenachricht zu senden, die eine Probe des zu testenden Services und einen Zeitspannenwert T_{Zeit} enthält,
von jedem Slave-Engerät (100) nach Empfang der Testanfragenachricht die Testprobe an alle Endgeräte der Interessensgemeinschaft zu schicken,
von jeden Slave-Endgerät (100) der Testgruppe nach Empfang einer Testprobe eine Quittungsnachricht an das Slave-Endgerät zu schicken, das die Testprobe gesendet hatte,
von jedem Slave-Endgerät (100) der Testgruppe an das Master-Endgerät (200) vor Ablauf der Zeitspanne Tₜₑₘₚ einen Testbericht zu schicken, der die Liste der Endgeräte enthält, die Empfänger der Testprobe sind, für die keine Quittung eingegangen ist.

2. Verfahren zur Kontrolle der Kommunikationen innerhalb eines Ad-hoc Mobil-Netzwerks, das eine Vielzahl von Endgeräten umfasst, die die Slave-Funktion (100) haben, wobei die Endgeräte ferner ein Slave-Managementsystem (101) aufweisen, wobei mindestens eines der Endgeräte (200) ferner die Funktion Master besitzt, wobei das Master-Endgerät (200) ferner ein Master-Managementsystem (201) aufweist, wobei das Verfahren mindestens aufweist:
einen Bestimmungsschritt, welche Kommunikationen zwischen den Slave-Endgeräten (100) in Abhängigkeit von den Hierarchisierungsregeln erlaubt sind, die in Abhängigkeit von mindestens einem der folgenden Kriterien erstellt wurden: Kritizität der Kommunikation, maximale Dauer Dₘₐₓ der Kommunikation, maximale Anzahl der Endgeräte, die gleichzeitig senden können, verfügbare Bandbreite,
einen Anzeigeschritt gegenüber den Slave-Managementsystemen (101), welche Slave-Endgeräte (101) eine Kommunikation aufbauen dürfen oder eine zuvor aufgebaute Kommunikation unterbrechen müssen,
wobei das Verfahren **dadurch gekennzeichnet ist, dass** es ferner zu einem bestimmten Augenblick einen Testschritt der Kommunikationen für alle Interessensgemeinschaften aufweist, die die Gesamtheit der Endgeräte umfassen, die eventuell untereinander kommunizieren müssen, wobei der Testschritt mindestens daraus besteht:
die Interessensgemeinschaft in eine Anzahl von Testgruppen zu unterteilen, die mindestens gleich eins ist, wobei jede der Testgruppen höchstens eine Anzahl von Endgeräten aufweist, die der maximalen Anzahl von Endgeräten entspricht, die gleichzeitig kommunizieren dürfen, wobei die Schnittstelle zwischen allen Testgruppen nicht leer ist,
vom Master-Endgerät (200) an alle Slave-Endgeräte (100) der Testgruppe eine Testanfragenachricht zu senden, die eine Probe des zu testenden Services und einen Zeitspannenwert T_{Zeit} enthält,
von jedem Slave-Engerät (100) nach Empfang der Testanfragenachricht die Testprobe an alle Endgeräte der Interessensgemeinschaft zu schicken,
von jeden Slave-Endgerät (100) der Testgruppe nach Empfang einer Testprobe eine Quittungsnachricht an das Slave-Endgerät zu schicken, das die Testprobe gesendet hatte,
von jedem Slave-Endgerät (100) der Testgruppe an das Master-Endgerät (200) vor Ablauf der Zeitspanne T_{Zeit} einen Testbericht zu schicken, der die Liste der Endgeräte enthält, die Empfänger der Testprobe sind, für die keine Quittung eingegangen ist.
